# EUROPÄISCHE PATENTSCHRIFT

(11) **EP 0 371 187 B1**
(45) Veröffentlichungstag und Bekanntmachung des Hinweises auf die Patenterteilung: **05.05.1993**
(21) Anmeldenummer: 89105516.2
(22) Anmeldetag: 29.03.1989
(51) Int. Cl.: C02F 1/72

(54) **Verfahren zum Entfernen von Pflanzenbehandlungsmitteln aus Rohwasser**
Process for removing substances for plant treatment from raw water
Procédé d'élimination de produits pour le traitement des plantes à partir de l'eau brute

(30) Priorität: 30.11.1988 DE 3840323
(43) Veröffentlichungstag der Anmeldung: 06.06.1990
(73) Patentinhaber: Gelsenwasser AG, D-45809 Gelsenkirchen (DE)
(72) Erfinder: Heymann, Ekkehard, Dr. Dipl.-Chem., D-7820 Titisee-Neustadt (DE); Nissing, Werner, Dipl.-Ing., D-4220 Dinslaken (DE)
(74) Vertreter: König, Reimar, Dr.-Ing.

(56) Entgegenhaltungen:
- EP-A- 0 238 731
- WO-A-85/00354
- DE-A- 3 707 021
- PATENT ABSTRACTS OF JAPAN, Band 10, Nr. 235 (C-366)[2291], 14. August 1986, Seite 57 C 366;
- PATENT ABSTRACTS OF JAPAN, Band 10, Nr. 235 (C-366)[2291], 14. August 1986, Seite 58 C 366;
- PATENT ABSTRACTS OF JAPAN, Band 10, Nr. 345 (C-386)[2401], 20. Novemeber 1986, Seite 34 C 386;

## Beschreibung

Die Erfindung betrifft ein verfahren zum Entfernen von Pflanzenbehandlungsmitteln aus Rohwasser zur Trinkwassergewinnung.

Grund- und Oberflächenwasser, das zur Trinkwasserversorgung genutzt wird, enthält immer größere Mengen an organischen Verbindungen, die durch die Abwässer chemischer Betriebe und in landwirtschaftlich genutzten Gebieten in das Wasser gelangen. Die resistenten Abwasserinhaltsstoffe sind im wesentlichen auf Industrieimmissionen zurückzuführen, während durch die landwirtschaftliche Nutzung im wesentlichen Pflanzenbehandlungsmittel (PBM) und Huminstoffe in das Wasser gelangen.

Die natürlichen verfahren zur Wasseraufbereitung wie Untergrundpassage zur künstlichen Grundwasseranreicherung und Uferfiltration, entfernen die organischen Verbindungen, insbesondere die PBM nur unvollständig wie die in vielen Grundwässern und Uferfiltraten festgestellten erhöhten Gehalte an diesen Stoffen beweisen. Belüftung, Flockung und Schnellfiltration haben ebenfalls nur eine geringe eliminierende Wirkung.

Durch Oxidationsmittel, beispielsweise Ozon oder Wasserstoffperoxid läßt sich die Struktur der organischen Verbindungen so verändern, daß sie sich vielfach biologisch leichter abbauen oder sich durch Kombination mit anderen Verfahren der Wasseraufbereitung entfernen lassen. Problematisch sind Oxidationsverfahren, wenn dadurch Stoffe entstehen, die toxischer als die Ausgansprodukte sind. Viele organische Verbindungen lassen sich durch Adsorption an Aktivkohle entfernen. Dabei sollen die Art des Wirkstoffs und die Struktur der Aktivkohle aufeinander abgestimmt sein. Aber die Entsorgung der die organischen Verbindungen adsorbierten Aktivkohle ist problematisch.

Des weiteren ist bekannt, daß sich viele organische Wasserinhaltsstoffe durch Oxidationsmittel so verändern lassen, daß sie an bei der Flockung mit Metallsalzen gebildeten Oxidhydratoberflächen adsorbiert und anschließend aus dem Wasser entfernt werden können.

Dieses Verfahren hat sich zum Entfernen von Huminstoffen bewährt, ist jedoch zum Entfernen von Pflanzenbehandlungsmitteln, insbesondere stickstoffhaltigen Herbiziden nicht geeignet, da die PBM bestenfalls unvollständig entfernt werden.

Der Erfindung liegt daher die Aufgabe zugrunde, ein wirksames und dabei kostengünstiges Verfahren zum Entfernen von Pflanzenbehandlungsmitteln aus Rohwasser zur Trinkwassergewinnung zu schaffen, das einen schnellen Reaktionsablauf gewährleistet, nur einen geringen apparativen Aufwand erfordert und eine Herabsetzung der Menge der Schadstoffe unter die gesetzlich vorgeschriebenen Werte ermöglicht.

Erfindungsgemäß wird diese Aufgabe mit den im Hauptanspruch angegebenen Verfahrensschritten gelöst. Dadurch, daß erfindungsgemäß wasserstoffperoxid in mit wasserlöslichen Eisen-(2)-Salzen versetztes Rohwasser mit mindestens 100% molarem Überschuß bezogen auf das eingesetzte Eisen-(2)-Salz mit hoher Turbulenz eingemischt wird, erfolgt die schnelle Oxidation der Pflanzenbehandlungsmittel mittels der Hydroxyl-Radikale, bevor überschüssiges Wasserstoffperoxid durch eine Sekundärdosierung von Eisen-(2)-Salz entfernt und die Flocken zusammen mit den adsorbierten Oxidationsprodukten abgetrennt werden. Dabei führt die erfindungsgemäße Maßnahme des turbulenten Einmischens des Wasserstoffperoxids in das bereits Eisen-(2)-Salze enthaltende Wasser zu Mischzeiten die es in überraschender weise ermöglichen daß die gebildeten Radikale im gewünschten Umfang die Pflanzenbehandlungsmittel oxidieren, und vermieden wird, daß die Hydroxyl-Radikale zerfallen, ohne die gewünschten Reaktionen mit den Pflanzenbehandlungsmitteln bewirkt zu haben. Nach der Sekundärdosierung und der Eisenhydroxidflockung, bei der sich dann an das Eisenhydroxid die Oxidationsprodukte anlagern, lassen sich diese zusammen mit dem Flockungsniederschlag mit in der Wasseraufbereitungstechnik bewährten Apparaturen ohne Schwierigkeiten abtrennen.

Aus der europäischen Patentanmeldung 0 238 731 sind zwar Wasseraufbereitungsmaßnahmen bekannt, bei denen mit Wasserstoffperoxid und Eisensalzen gearbeitet wird, jedoch werden diese dort zum Entfernen von giftigen, organischen Verbindungen und Metallen aus Fabrikabwasser vorgeschlagen, das lediglich so weit vorgereinigt werden soll, daß es dann in die Abwasserkanalisation geleitet werden kann. Mit dem bekannten Vorschlag wird daher nicht einmal die Wasserqualität des Rohwassers erreicht, das das Ausgangsmaterial für das vorliegende Verfahren darstellt. Des weiteren ist von besonderer Bedeutung daß erfindungsgemäß Wasserstoffperoxid mit mindesten 100% molarem Überschuß und mit hoher Turbulenz zugegeben wird, wodurch überraschend die zuvor dargelegten Reaktionsabläufe stattfinden, während diese Verhältnisse beim bekannten Vorschlag nicht gegeben sind, zumal mit statischen Mischern Berührungszeiten verbunden sind, die einen MillisekundenReaktionsablauf geradezu verhindern.

Vorzugsweise wird dem Wasser lösliche Eisen-(2)-Sulfat zugegeben.

Da ein Wasserstoffperoxidüberschuß im aufbereiteten Wasser wegen dessen stark oxidierender Wirkung unerwünscht ist, sollte der Überschuß durch eine Sekundärdosierung von Eisen-(2)-Salz im stöchiometrischen Verhältnis entfernt werden.

Im Hinblick darauf, daß ein Sedimentieren der Flocken durch die angelagerten Oxidationsprodukte in bestimmten Fällen behindert wird, ist es vorteilhaft, dem Wasser makromolekulare, organische Flockungshilfsmittel zuzusetzen. Flockungshilfsmittel begünstigen aufgrund ihrer Oberflächenbeschaffenheit die Bildung kompakter, sedimentationsfähiger oder filtrierbarer Flocken. Die Makromoleküle der Flockungshilfsmittel enthalten neutrale oder elektrisch geladene Gruppen, an denen gelöste und ungelöste Stoffe adsorptiv angelagert werden. Dadurch werden zusätzlich noch Substanzen, die sich durch eine Metallhydroxid-Flockung nicht entfernen lassen, ausgeflockt.

Flockungshilfsmittel stellen daher eine verfahrenstechnisch sinnvolle Ergänzung der Aufbereitungsschritte zum Entfernen organischer Verbindungen aus Wasser dar. Durch ihre Verwendung wird der spezifische Bedarf an Flockungsmitteln vermindert und der Schlammanfall verringert, was zu einer Entlastung der Umwelt bei der Schlammentsorgung führt.

Da die Hydroxyl-Radikalbildung bevorzugt bei niedrigen pH-Werten stattfindet, während für die Flockung höhere pH-Werte günstig sind, kann der pH-Wert des Wassers während der Behandlung auf einen für die Oxidation der organischen Verbindungen optimalen Wert entsprechend der Struktur der organischen Verbindungen eingestellt werden, der von dem pH-Wert für die Oxidation der Eisen-(2)-Salze verschieden sein kann, was vorzugsweise durch Zudosieren von Schwefelsäure geschieht.

Um das Trinkwasser verwenden zu können, muß es jedoch neutralisiert, d.h. auf den pH-Wert 7 gebracht werden. Zu diesem Zweck wird es vorzugsweise durch Zugabe von Natronlauge neutralisiert.

Zur Beschleunigung der Oxidation der organischen Verbindungen und der Eisen-(2)-Salze zu Eisen-(3)-Verbindungen ist es wesentlich, das Wasserstoffperoxid mit hoher Turbulenz in mit Eisen-2-Salzen versetztes Wasser einzumischen.

Wenn für das Entfernen der organischen Verbindungen aufgrund ihrer chemischen Struktur niedrige pH-Werte eingestellt werden müssen, sollte die Oxidation und Flockung besonders bei gut gepufferten Wässern, d.h. bei hohen Konzentrationen anorganischer Kohlenstoffverbindungen, in einem geschlossenen System stattfinden, wodurch sich das Karbonatsystem des Wassers verlustfrei erhalten läßt.

Vorzugsweise wird mit organischen Verbindungen stärker belastetes Wasser zunächst einer Oxidations- und Flockungsbehandlung unterzogen. Restgehalte organischer Verbindungen können dann in nachgeschalteten Adsorptionsanlagen entfernt werden. Hierzu kann sich der Oxidations- und Flockungsbehandlung eine weitere Behandlung mittels Aktivkohle anschließen. Da die Oxidations- und Flockungsbehandlung etwa 75% der organischen Stoffe aus dem Wasser entfernt, läßt sich die nachfolgende Aktivkohleabsorptionsstufe wesentlich effektiver betreiben und führt zu einem praktisch vollständigen Entfernen der organischen Verbindungen, ohne daß ein übergroßer Verbrauch an Aktivkohle eintritt oder ein häufiges Regenerieren erforderlich ist.

Die Aktivkohle kann entweder dem Wasser in Form von Aktivkohlepulver zudosiert und anschließend ausgefiltert werden, oder aber das Wasser wird im Anschluß an die Oxidationsund Flockungsbehandlung durch ein Aktivkohlebett geleitet.

Wird dem Wasser Aktivkohlepulver zudosiert, lassen sich die Aktivkohle und die Flocken gemeinsam ausfiltern.

Um eine besonders gute Wirksamkeit der Aktivkohlefilterung zu erreichen, ist es wichtig, eine Aktivkohle mit hoher spezifischer Oberfläche und hoher Jod-Zahl zu verwenden.

Mit dem erfindungsgemäßen Verfahren lassen sich Pflanzenbehandlungsmittel kostengünstig und mit geringem apparativem Aufwand aus dem Wasser entfernen.

Im Rahmen eines Versuchs wurde mit dem erfindungsgemäßen Verfahren ein mit Triazinen stark belastetes Oberflächenwasser, das 1500 ng/l Atrazin enthielt, unter folgenden Bedingungen aufbereitet:

| | |
|---|---|
| pH-Wert | 5 |
| Eisen-(2)-Zusatz | 0,25 mol/m³ |
| Wasserstoffperoxid-Zusatz | 0,5 mol/m³ |

Die Triazinkonzentration im aufbereiteten Wasser lag danach unter der analytischen Nachweisgrenze von 10 ng/l. Die Triazine wurden vollständig oxidiert. Weder im Wasser noch in den abgetrennten Flocken ließen sich außer Kohlendioxid Oxidationsprodukte nachweisen.

Insbesondere in Wasser, das mit Huminstoffen stärker belastet ist, wird die Adsorption der Pflanzenbehandlungsmittel teilweise erheblich gestört. Konkurrierende Vorgänge und Verdrängungsreaktionen an den aktiven Oberflächen der Adsorptionsmittel können deren Eliminationsleistung für Pflanzenbehandlungsmittel stark verringern. Dieses Problem läßt sich mit dem erfindungsgemäßen Verfahren lösen, da durch die Kombination von Oxidation und Flockung die Konzentration an organischen Stoffen im Wasser um etwa 75% verringert wird. Die anschließende Aktivkohleadsorption läßt sich wesentlich effektiver betreiben. Hierdurch lassen sich auch bestehende Adsorptionsanlagen problemlos auf das erfindungsgemäße Verfahren umstellen. Die Abstimmung der Verfahrensstufen Oxidation, Flockung und Adsorption erhöht daher die Zuverlässigkeit und zusätzlich die Wirtschaftlichkeit der Wasseraufbereitung, um organische Verbindungen zu entfernen.

Die für die Adsorption erforderliche spezifische Oberfläche der Aktivkohle sollte mindestens 800 m²/g betragen. Da zwischen der spezifischen Oberfläche und der Jod-Zahl eine gute Korrelation besteht, ist die Jod-Zahl ein geeignetes Kriterium für die Adsorptionsleistung bei organischen Verbindungen, insbesondere für Pflanzenbehandlungsmittel. Die Jod-Zahl sollte den Wert von 800 mg/g nicht unterschreiten.

Der Gehalt an organischen Substanzen insbesondere Huminstoffen ist bestimmend für die Struktur der einzusetzenden Aktivkohle. Eine gute Adsorption der Pflanzenbehandlungsmittel und der Huminstoffe erfordert Aktivkohle mit einem großen Porenvolumen. Der Anteil der Mikro- und Mesoporen sollte etwa gleich groß und in der Summe höher als das der Makroporen liegen.

## Patentansprüche

1. Verfahren zum Entfernen von Pflanzenbehandlungsmitteln aus Rohwasser zur Trinkwassergewinnung mit folgenden Schritten:
- Versetzen des Rohwassers mit wasserlöslichen Eisen-(2)-Salzen,
- Einmischen von Wasserstoffperoxid mit hoher Turbulenz im molaren Überschuß von mindestens 100% bezogen auf das zugesetzte Eisen-(2)-Salz zur Bildung von Hydroxyl-Radikalen aus Wasserstoffperoxid,
- Oxidation der Pflanzenbehandlungsmittel mittels der Hydroxyl-Radikalen,
- Entfernen des überschüssigen Wasserstoffperoxids durch eine Sekundärdosierung von Eisen-(2)-Salz und
- Ausfällen und Abtrennen der Flocken zusammen mit den adsorbierten Oxidationsprodukten.

2. Verfahren nach Anspruch 1, dadurch gekennzeichnet, daß dem Wasser makromolekulare organische Flockungshilfsmittel zugesetzt werden.

3. Verfahren nach Anspruch 1 oder 2, gekennzeichnet durch die Verwendung von Eisen-(2)-Sulfat.

4. Verfahren nach einem oder mehreren der Ansprüche 1 bis 3, dadurch gekennzeichnet, daß der pH-Wert des Wassers auf einen für die Oxidation optimalen Wert entsprechend der chemischen Struktur der Pflanzenbehandlungsmittel eingestellt wird.

5. Verfahren nach einem oder mehreren der Ansprüche 1 bis 4, dadurch gekennzeichnet, daß der pH-Wert des Wassers für eine günstige Oxidation der Pflanzenbehandlungsmittel und der Eisen-(2)-Salze jeweils unterschiedlich eingestellt wird.

6. Verfahren nach Anspruch 4 oder 5, dadurch gekennzeichnet, daß der pH-Wert durch Zudosieren von Schwefelsäure eingestellt wird.

7. Verfahren nach einem oder mehreren der Ansprüche 4 bis 6, dadurch gekennzeichnet, daß der pH-Wert des Wassers nach Beendigung der Behandlung auf den Wert 7 eingestellt wird.

8. Verfahren nach Anspruch 7, dadurch gekennzeichnet, daß die Neutralisation mit Natronlauge geschieht.

9. Verfahren nach einem oder mehreren der Ansprüche 1 bis 8, dadurch gekennzeichnet, daß die Oxidation und Flockung bei gut gepuffertem Wasser mit hohem Gehalt an anorganischen Kohlenstoffverbindungen in einem geschlossenen System durchgeführt wird.

10. Verfahren nach einem oder mehreren der Ansprüche 1 bis 9, dadurch gekennzeichnet, daß mit organischen Verbindungen stärker belastetes Wasser zunächst einer Oxidations- und Flockungsbehandlung unterzogen und Restgehalte organischer Verbindungen in nachgeschalteten Adsorptionsanlagen entfernt werden.

11. Verfahren nach Anspruch 10, dadurch gekennzeichnet, daß Restgehalte organischer Verbindungen bzw. nicht zerstörte organische Verbindungen nach der Oxidations- und Flockungsbehandlung mittels Aktivkohle entfernt werden.

12. Verfahren nach Anspruch 11, dadurch gekennzeichnet, daß die Aktivkohle dem Wasser in Form von Aktivkohlepulver zudosiert und anschließend ausgefiltert wird.

13. Verfahren nach Anspruch 12, dadurch gekennzeichnet, daß die Aktivkohle und der Flockungsniederschlag gemeinsam ausgefiltert werden.

14. Verfahren nach Anspruch 11, dadurch gekennzeichnet, daß das Wasser durch ein Aktivkohlefilterbett geleitet wird.

15. Verfahren nach einem oder mehreren der Ansprüche 11 bis 13, gekennzeichnet durch die Verwendung von Aktivkohle mit hoher spezifischer Oberfläche und hoher Jod-Zahl.

16. Verfahren nach einem oder mehreren der Ansprüche 1 bis 15, dadurch gekennzeichnet, daß stickstoffhaltige Pflanzenbehandlungsmittel aus dem Wasser entfernt werden.

## Claims

1. Process for the removal of plant treatment agents from raw water for the production of drinking water, comprising the following steps:
- treating the raw water with water-soluble iron (II) salts,
- mixing in hydrogen peroxide highly turbulently in a molar excess of at least 100% based on the added iron (II) salt to form hydroxyl radicals from hydrogen peroxide,
- oxidising the plant treatment agent by means of the hydroxyl radicals,
- removing the excess hydrogen peroxide by a secondary dosage with iron (II) salt and
- precipitating and separating off the flocs together with the adsorbed oxidation products.

2. Process according to claim 1, characterised in that macromolecular organic flocculating aids are added to the water.

3. Process according to claim 1 or claim 2, characterised by the use of iron (II) sulphate.

4. Process according to one or more of claims 1 to 3, characterised in that the pH of the water is adjusted to an optimum value for the oxidation corresponding to the chemical structure of the plant treatment agent.

5. Process according to one or more of claims 1 to 4, characterised in that the pH of the water is differently adjusted for good oxidation of the plant treatment agent and of the iron (II) salt respectively.

6. Process according to claim 4 or claim 5, characterised in that the pH is adjusted by dosage with sulphuric acid.

7. Process according to one or more of claims 4 to 6, characterised in that the pH of the water is adjusted to 7 after completion of the treatment.

8. Process according to claim 7, characterised in that the neutralisation is performed with caustic soda.

9. Process according to one or more of claims 1 to 8, characterised in that in the case of well-buffered water with a high content of inorganic carbon compounds the oxidation and flocculation is performed in a closed system.

10. Process according to one or more of claims 1 to 9, characterised in that water heavily laden with organic compounds is first subjected to an oxidation and flocculation treatment and residual organic compounds are removed in downstream adsorption plant.

11. Process according to claim 10, characterised in that residual organic compounds and/or organic compounds that have not been destroyed are removed after the oxidation and flocculation treatment by means of active carbon.

12. Process according to claim 11, characterised in that the active carbon is dosed into the water in the form of active carbon powder and subsequently filtered off.

13. Process according to claim 12, characterised in that the active carbon and the flocculation precipitate are filtered off together.

14. Process according to claim 11, characterised in that the water is passed through a filter bed of active carbon.

15. Process according to one or more of claims 11 to 13, characterised by the use of active carbon having a high specific surface and a high iodine number.

16. Process according to one or more of claims 1 to 15, characterised in that nitrogen-containing plant treatment agents are removed from the water.

## Revendications

1. Procédé pour l'élimination de produits pour le traitement des plantes à partir d'eau brute en vue de la production d'eau potable, comportant les étapes suivantes :
- réaction de l'eau brute avec des sels de fer (II),
- mélange de peroxyde d'hydrogène moyennant une turbulence élevée, selon un excès molaire d'au moins 100 % par rapport au sel de fer (II) ajouté, en vue de générer des radicaux hydroxyles à partir du peroxyde d'hydrogène
- oxydation des produits de traitement des plantes à l'aide des radicaux hydroxyles,
- élimination du peroxyde d'hydrogène en excès par un dosage secondaire de sels de fer (II), et
- précipitation et séparation des flocons avec les produits d'oxydation a sorbés.

2. Procédé selon la revendication 1, caractérisé en ce qu'on ajoute à l'eau des agents de floculation organiques macromoléculaires.

3. Procédé selon la revendication 1 ou 2 caractérisé en ce qu'on utilise du sulfate de fer (II).

4. Procédé selon l'une ou plusieurs des revendications 1 à 3 caractérisé en ce qu'on règle le pH de l'eau à une valeur optimale pour l'oxydation, en fonction de la structure chimique du produit de traitement des plantes

5. Procédé selon l'une ou plusieurs des revendications 1 à 4 caractérisé en ce qu'on règle le pH de l'eau chaque fois différemment pour une oxydation avantageuse des produits de traitement des plantes et pour l'oxydation des sels de fer (II).

6. Procédé selon la revendication 4 ou 5 caractérisé en ce qu'on règle le pH par addition d'acide sulfurique.

7. Procédé selon l'une ou plusieurs des revendications 4 à 6 caractérisé en ce qu'on règle le pH de l'eau à 7 après la fin du traitement.

8. Procédé selon la revendication 7 caractérisé en ce qu'on effectue la neutralisation à l'aide de soude caustique.

9. Procédé selon l'une ou plusieurs des revendications 1 à 8 caractérisé en ce qu'on effectue l'oxydation et la floculation dans un système fermé, dans le cas d'une eau bien tamponnée, lorsque la teneur en composés du carbone inorganiques est élevée.

10. Procédé selon l'une ou plusieurs des revendications 1 à 9, caractérisé en ce qu'on soumet une eau assez chargée en composés organiques d'abord à un traitement d'oxydation et de floculation et en ce qu'on élimine les teneurs résiduelles en composés organiques dans des installations d'adsorption agencées en aval.

11. Procédé selon la revendication 10 caractérisé en ce qu'on élimine les teneurs résiduelles en composés organiques ou les composés organiques qui n'ont pas été dégradés, après le traitement par oxydation et floculation, à l'aide de charbon actif.

12. Procédé selon la revendication 11 caractérisé en ce qu'on ajoute le charbon actif à l'eau sous forme de poudre de charbon actif et en ce qu'on le sépare ensuite par filtration.

13. Procédé selon la revendication 12 caractérisé en ce qu'on sépare le charbon actif et le dépôt de floculation simultanément par filtration.

14. Procédé selon la revendication 11 caractérisé en ce qu'on mène l'eau à travers un lit filtrant de charbon actif.

15. Procédé selon l'une ou plusieurs des revendications 11 à 13 caractérisé par l'utilisation de charbon actif ayant une surface spécifique élevée et un indice d'iode élevé.

16. Procédé selon la revendication 1 à 15 caractérisé en ce qu'on élimine de l'eau les produits de traitement des plantes, qui contiennent de l'azote.
